(19) Europäisches Patentamt

European Patent Office

Office européen des brevets

(11) **EP 1 427 154 B1**

(12) **FASCICULE DE BREVET EUROPEEN**

(45) Date de publication et mention
de la délivrance du brevet:
**16.03.2005 Bulletin 2005/11**

(51) Int Cl.⁷: **H04L 12/56**

(21) Numéro de dépôt: **03292738.6**

(22) Date de dépôt: **03.11.2003**

(54) **Procédé de contrôle d'une mémoire tampon de paquets de données, et dispositif correspondant**

Verfahren zur Paketpufferspeicherverwaltung und zugehörige Vorrichtung

Method for packet buffer management and corresponding apparatus

(84) Etats contractants désignés:
**AT BE BG CH CY CZ DE DK EE ES FI FR GB GR HU IE IT LI LU MC NL PT RO SE SI SK TR**

(30) Priorité: **03.12.2002 FR 0215207**

(43) Date de publication de la demande:
**09.06.2004 Bulletin 2004/24**

(73) Titulaire: **FRANCE TELECOM**
**75015 Paris (FR)**

(72) Inventeurs:
• **Deleam, David**
**22700 Perros Guirec (FR)**
• **Bouteille, Franck**
**22560 Trebeurden (FR)**

(74) Mandataire: **Loisel, Bertrand**
**Cabinet Plasseraud**
**65/67 rue de la Victoire**
**75440 Paris Cedex 09 (FR)**

(56) Documents cités:
• **ROZENSHINE-KEMELMACHER: "ATM Traffic Analysis: Burst Scale Probability Function" ITC-CSCC 2002 PROCEEDINGS, [en ligne] 16 - 19 juillet 2002, pages 1-4, XP002251166 Extrait de l'Internet: <URL:http://www.kmutt.ac.th/itc2002/CD/pdf /18_07_45/TA2_OB/1.pdf> [extrait le 2003-08-13]**
• **TANENBAUM: "Computer networks" 31 août 2002 (2002-08-31) XP002270794 * alinéa [6.2.4] ***

**Description**

La présente invention concerne les techniques de traitement de signaux à contraintes temporelles reçus par l'intermédiaire de liaisons asynchrones.

Elle concerne plus particulièrement un mécanisme pouvant être mis en oeuvre dans le cas d'une transmission asynchrone avec forte gigue temporelle, par exemple dans le cas de communications sur réseaux fonctionnant selon le protocole Internet (IP, "Internet Protocol"). Ce mécanisme s'intègre dans les terminaux, ponts, passerelles, et plus généralement dans tous éléments du réseau pouvant intervenir sur les données transportées.

Plus spécifiquement, l'invention s'applique particulièrement dans tous équipements recevant des flux (audio, vidéo, et/ou données) constitués de paquets envoyés de manière régulière et munis d'une mémoire organisée en mode premier entré-premier sorti (FIFO, "First In-First Out") pour tenir compte du phénomène de gigue réseau. C'est notamment le cas pour des terminaux supportant la voix sur IP (VOIP, "Voice Over IP"), qui intègrent tous une mémoire tampon gérée en FIFO pour absorber notamment la gigue réseau et qui s'échangent des flux de données audio de manière régulière au travers de paquets IP transportés à l'aide du protocole UDP ("User Datagram Protocol"). Par exemple, deux terminaux en communication à l'aide du codeur de parole G.723.1 normalisé par l'Union Internationale des Télécommunications (ITU-T) échangent classiquement 24 octets de données audio toutes les 30 millisecondes.

L'invention complète ou adapte les mécanismes classiques de gestion de FIFO déjà utilisés. Des mécanismes de gestion des mémoires tampon sont par exemple divulgués par le livre « Computer networks », Tanenbaum, chapitre 6.2.4.

L'invention vise particulièrement les applications interactives de type communication vocale par exemple, mais peut aussi avoir un intérêt dans les applications moins interactives comme notamment la lecture en transit ("streaming").

Dans toute communication asynchrone en mode paquet, le réseau introduit un retard fixe ainsi qu'un retard variable appelé "gigue réseau". La réception des paquets qui traversent le réseau se trouve retardée par rapport à leur instant d'émission. Le retard fixe, s'il reste faible, n'est pas le plus contraignant. Son effet est essentiellement ressenti comme posant un problème d'interactivité dans la communication. La gigue réseau est plus gênante car elle entraîne d'une part des trous (manque de signal à restituer, le paquet arrivant trop tard) et d'autre part, à d'autres moments, une surabondance de paquets à restituer (arrivée simultanée de plusieurs paquets consécutifs formant une rafale), ce qui peut introduire un retard supplémentaire néfaste à l'interactivité de la communication, par exemple dans le cas de la VOIP.

Il faut donc introduire à la réception un mécanisme permettant de gérer dans une certaine mesure ces variations de retard de transmission. Ce mécanisme est à placer au niveau du récepteur et non au niveau de l'émetteur, car ce dernier émet des paquets de façon périodique, les variations étant introduites par le réseau asynchrone. Comme ce réseau ne peut être contrôlé ni par l'émetteur, ni par le récepteur, il est nécessaire de s'adapter à son comportement non déterministe et non prédictible.

Le mécanisme généralement utilisé pour contrôler le phénomène de gigue, est la mise en oeuvre d'une FIFO qui permet de compenser les retards des paquets reçus au système de restitution.

Il est possible que les paquets soient reçus dans un ordre différent de celui dans lequel ils ont été émis. Ce phénomène, appelé "déséquencement", est dû au fait que les paquets transmis circulent de façon indépendante sur les réseaux IP. Néanmoins, c'est un phénomène relativement rare sur Internet (probabilité de l'ordre de 0,01%). Les protocoles temps réel employés permettent, grâce à un numéro de séquence attribué à chaque paquet, de remettre ceux-ci dans le bon ordre à la réception, ou encore de détruire les paquets déséquencés si leur instant de restitution est dépassé. C'est le cas notamment du protocole RTP ("Real Time Protocol") décrit dans les RFC 1889 et 1890 ("Request For Comments") publiées en janvier 1996 par l'IETF ("Internet Engineering Task Force").

La FIFO précitée peut se trouver à différents endroits au sein de la chaîne de réception.

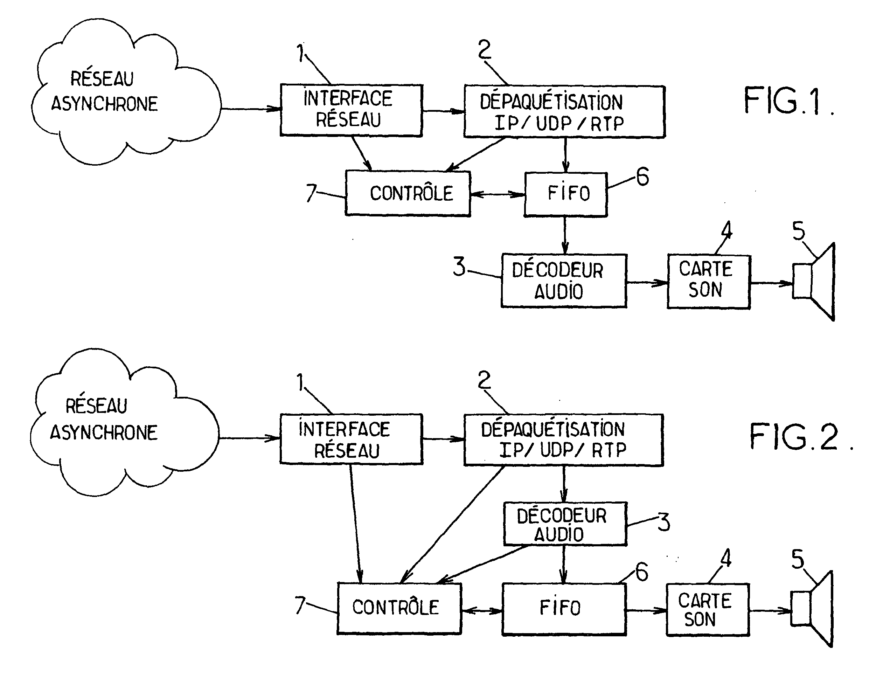

Les figures 1 et 2 montrent un récepteur de type VOIP comportant une interface réseau 1, consistant habituellement en un modem ou une carte réseau, reliée à un module 2 implémentant les protocoles IP, UDP et RTP pour recevoir les paquets IP et extraire leur contenu (opération de "dépaquétisation"). Ce contenu est soumis à un décodeur de parole 3 correspondant au codeur (G.723.1 ou autre) utilisé par l'émetteur et opérant la décompression numérique du signal audio. La parole est finalement restituée au moyen d'une carte son 4 munie d'un tampon de restitution et d'un haut-parleur 5.

Dans la configuration illustrée par la figure 1, la FIFO 6 est située entre le module de dépaquétisation 2 et le décodeur 3. Dans la configuration illustrée par la figure 2, elle est située entre le décodeur 3 et la carte son 4. Cette FIFO 6 est associée à un module de contrôle 7 qui met en oeuvre les algorithmes de compensation de la gigue réseau.

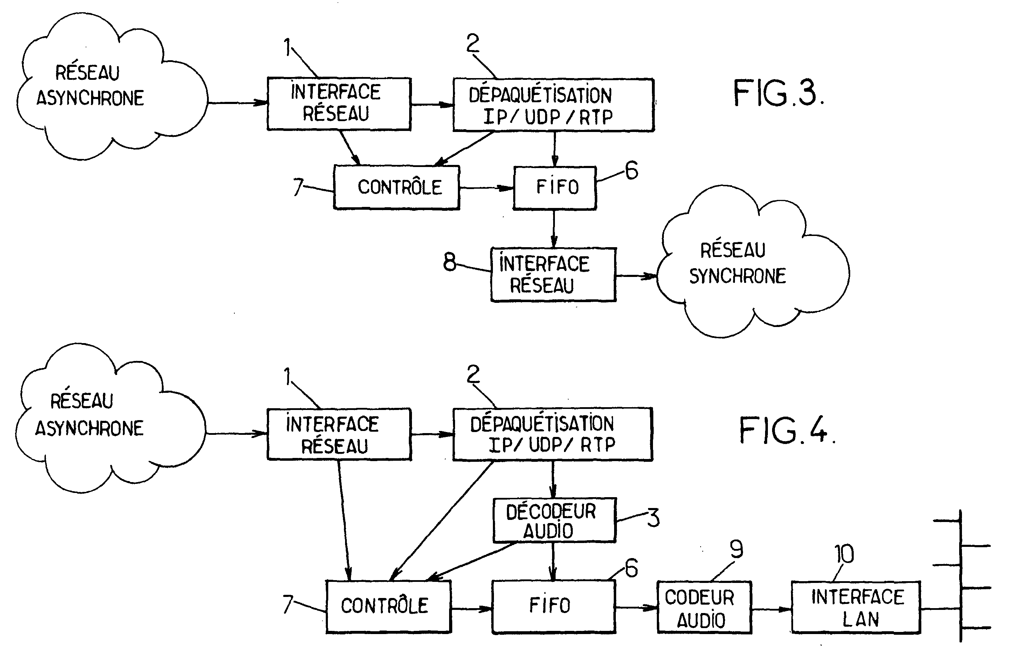

Les figures 3 et 4 illustrent d'autres environnements possibles de la FIFO de gigue 6, ailleurs que dans un récepteur restituant la parole transmise. Dans la pratique, les configurations possibles sont très nombreuses.

Le schéma de la figure 3 ne comporte pas de décodeur audio. Il correspond par exemple à une passerelle placée entre le réseau asynchrone de type IP et un réseau synchrone. Le flux d'informations lu dans la FIFO 6 est fourni à l'interface réseau 8 qui le met en forme pour la transmission sur le réseau synchrone.

L'exemple d'équipement représenté sur la figure 4 assure une fonction de transcodage, par exemple entre une compression G.723.1 sur le réseau asynchrone et un codage à plus haut débit tel que G.711 sur un réseau local (LAN, "Local Area Network"). La FIFO de gigue 6 peut être placée après le décodeur 3 de type G.723.1, comme représenté, ou avant celui-ci. Le flux audio décodé lu dans la FIFO 6 est recodé par le codeur 9 de type G.711 puis fourni au circuit 10 d'interface avec le LAN.

La position de la FIFO peut avoir une influence sur la gestion de celle-ci. En effet, dans le cas de la VOIP par exemple, lorsque la FIFO est placée avant le décodeur (figure 1 ou 3), l'algorithme ne peut pas accéder au signal lui-même car il ne dispose alors que d'une version codée des paramètres caractérisant le signal. Lorsque la FIFO est placée après le décodeur (figure 2 ou 4), il est alors possible d'adapter la gestion de la FIFO au signal décodé qu'elle contient.

Une des premières techniques de gestion de la gigue qui a été proposée consiste en l'utilisation d'un seuil fixe: lorsque la FIFO est pleine et qu'un paquet arrive, celui-ci ne peut être intégré à la FIFO ce qui entraîne sa destruction. C'est alors la taille de la FIFO qui impose le retard maximal qu'elle peut absorber. C'est également cette taille qui permet de définir le compromis interactivité/perte.

La gigue réseau peut prendre des valeurs relativement élevées (par exemple 300 ms). Si la FIFO est dimensionnée pour pouvoir absorber une gigue maximale moins grande, alors lorsque la gigue d'un paquet dépasse cette limite, le système de restitution détecte une absence de paquet, et doit pallier le manque de signal en générant un morceau de signal de remplacement correspondant à un paquet (pour simplifier l'expression, on dira qu'il génère un paquet de remplacement ou de substitution pour le paquet manquant, même si le mécanisme précis utilisé ne comporte généralement pas la production effective d'un paquet). Cette absence de paquet est donc gérée de la même façon qu'une perte du paquet dans le réseau. La durée de signal stocké dans la FIFO est donc un paramètre important pour l'interactivité et la qualité de la communication. Une FIFO trop grande réduit l'interactivité mais préserve la qualité, une FIFO trop petite améliore l'interactivité mais peut dégrader la qualité en impliquant la génération trop fréquente de paquets de remplacement.

Lorsque la FIFO est pleine, une autre possibilité est de conserver les nouveaux paquets mais de détruire les paquets plus anciens déjà présents dans la FIFO. Cette méthode de vidange de la FIFO altère de façon équivalente la qualité du signal. Cependant, cette méthode assez brutale est couramment utilisée dans la pratique, afin de privilégier le fil de la communication en mettant à jour la FIFO avec les données les plus récentes. La vidange peut être totale ou partielle. Dans ce dernier cas, l'utilisation conjointe d'une technique de DAV (Détection d'Activité Vocale) permet de supprimer judicieusement les trames de signal ne comportant que du bruit de fond. De même, dans certaines réalisations, la décision de vidange de la FIFO peut être prise avant qu'elle soit pleine.

Quelles que soient les techniques, plus ou moins complexes, adoptées pour gérer la FIFO de gigue, celle-ci a une taille finie et est exposée au problème suivant.

Il a été constaté que sur des réseaux à qualité de service non garantie, Internet par exemple, ayant une gigue relativement importante, les rafales ("bursts") de paquets étaient fréquentes et parfois de taille très importante. Dans le cas considéré de l'émission régulière de paquets, lorsqu'un paquet est retenu dans un routeur du réseau IP pendant un temps supérieur à la période d'émission, un certain nombre de paquets peuvent s'accumuler dans ce même routeur et être libérés de façon quasi instantanée avec le paquet le plus ancien. Plus le temps de rétention dans le routeur est important plus la taille de la rafale sera importante. Cette taille peut alors être supérieure à la taille finie de la FIFO et donc engendrer une saturation de celle-ci.

Ce phénomène de saturation est géré par les mécanismes de gestion de FIFO précités, soit en ne permettant plus d'écrire dans la FIFO lorsqu'elle est pleine, soit en effectuant une vidange partielle ou globale de la FIFO pour pouvoir continuer à y écrire.

Dans le premier cas, la FIFO est pleine à la fin de la rafale, et introduit donc un retard maximal dans la communication.

Dans le deuxième cas, une quantité significative de signal a pu être supprimée, et le taux de remplissage de la FIPO est dans un état dépendant de la taille de la rafale et de celle de la FIFO. En effet, prenons l'exemple d'une rafale de taille juste inférieure à 2 fois la taille de la FIFO. Dès la réception de la première partie de cette rafale dans la FIFO, on effectue une vidange de celle-ci, et donc la deuxième partie est placée intégralement dans la FIFO. On se retrouve alors dans un état proche du premier cas, avec un retard maximal dans la communication. Si au contraire la taille de la rafale avait été égale ou peu supérieure à la taille de la FIFO, celle-ci aurait subi une vidange vers la fin réception de cette rafale et serait alors vide, c'est-à-dire dans un état où le moindre retard pour le paquet suivant entraîne un problème. En effet, ce petit retard impose alors la génération d'un paquet de remplacement, avec l'altération de qualité qui en résulte, alors que des paquets valides viennent juste d'être supprimés.

Dans tous les cas, l'apparition de rafales de taille excessive entraîne une dégradation de la qualité de la communication. Dans certains cas, elle s'accompagne d'un accroissement fort du retard dans la communication, et donc d'une dégradation forte de l'interactivité de celle-ci, cet état pouvant être plus ou moins long suivant les mécanismes de gestion de FIFO de gigue mis en place et le type de transmission.

Les mécanismes connus de gestion de cette FIFO de gigue ne comportent pas de procédures particulières pour gérer de telles rafales de taille excessive. Ils se contentent de gérer les saturations de la FIFO, en prévoyant parfois des états de transition vers cette saturation, dans un examen a posteriori de son degré de remplissage.

Un but de la présente invention est de limiter la dégradation inévitable de qualité due au phénomène de gigue réseau, et notamment de limiter dans le temps l'impact des fortes perturbations engendrées par le réseau.

L'invention est définie par les revendications indépendantes.

L'invention propose ainsi un procédé de traitement de paquets de données numériques reçus, contenant des données de description de segments temporels successifs d'un flux de signal à restituer, dans lequel on enregistre dans une mémoire tampon des éléments obtenus à partir des paquets reçus, et on délivre en mode premier entré - premier sorti des éléments enregistrés dans la mémoire tampon. Selon l'invention, on détecte a priori une rafale de paquets remplissant une condition de taille de rafale, sur la base d'un retard de réception évalué en réponse à la réception d'un premier paquet de la rafale, et on contrôle le contenu de la mémoire tampon en tenant compte de la détection de la rafale remplissant ladite condition de taille.

Un "segment" de signal peut s'entendre ici comme correspondant à un intervalle de temps d'un signal continu dans le temps tel qu'un signal audio ou vidéo (il peut par exemple consister en une ou plusieurs trames consécutives d'un codeur de parole, d'images animées, ...). Le "segment" de signal peut aussi s'entendre comme correspondant à des données régulièrement produites par une source de données (par exemple échantillons de mesures prises périodiquement, images, ...). Dans un cas comme dans l'autre, ces segments sont généralement produits de façon régulière ou quasi-régulière par un émetteur distant.

Le procédé applique un traitement spécifique aux rafales de taille excessive, ou "rafales excessives", à partir d'une détection de celles-ci. On peut notamment viser en fin de ce traitement spécifique un état considéré comme idéal de la mémoire tampon de type FIFO, c'est-à-dire un état assurant le compromis désiré entre interactivité et perte, exprimé par une valeur cible $S_{FIFO}$ pour le remplissage de la FIFO en fin de rafale. Ceci permet de ne pas prolonger l'effet de la forte perturbation momentanée causée par le réseau.

La détection d'une rafale excessive se fait à l'aide d'une estimation de taille de rafale, résultant du retard de réception de son premier paquet, pour déterminer si la rafale qui est en train d'arriver peut ou non être considérée comme normale. Une rafale normale (ne remplissant pas la condition de taille) sera alors traitée normalement dans la FIFO.

La condition de taille peut s'exprimer par un seuil à définir par l'utilisateur ou l'environnement du procédé. Ce seuil, fixe ou adaptatif, est borné à une valeur correspondant à la taille de la FIFO. Il pourra avoir des valeurs inférieures en fonction de l'application et du réseau support. Par exemple, une même application de VOIP pourra utiliser un seuil plus faible dans le cadre d'une transmission sur un réseau privé que dans le cadre d'une transmission sur un réseau à gigue et perturbations plus fortes tel que l'Internet. Ce seuil pourra éventuellement être adapté de manière dynamique en fonction du comportement du réseau. Néanmoins, il sera généralement assez élevé, car le classement d'une rafale en rafale excessive doit correspondre à une perturbation forte et occasionnelle du réseau. Les perturbations courantes ou normales doivent quant à elles être gérées par les mécanismes normaux de contrôle de la FIFO de gigue, notamment par le choix d'une taille adaptée de la FIFO.

Pour ne pas avoir à traiter le problème a posteriori, l'estimation de la taille de rafale a lieu dès l'arrivée du premier paquet de la rafale. Ceci permet de déclencher immédiatement le traitement approprié de la rafale. Dans le cas où il faut supprimer des paquets, la suppression peut avoir lieu avant que ces paquets ne soient placés dans la FIFO, ce qui évite de la perturber.

Dans le cas courant de communications sur IP, un certain nombre d'informations permettent d'estimer la taille d'une rafale, en particulier des informations obtenues par le protocole RTP à savoir le numéro de séquence et/ou l'estampille temporelle ("timestamp").

Lors de l'arrivée de rafales de taille importante, les paquets conservés introduisent un taux de remplissage de la FIFO qui peut se propager pendant un certain nombre de cycles d'horloge et réduire l'efficacité de celle-ci pour des phénomènes de gigue relativement faibles. L'invention, en se basant sur une détection de ces rafales de taille importante, résout ce problème à l'aide de différentes techniques d'actions et de suppressions de paquets constitutifs de la rafale excessive. Ces suppressions peuvent dépendre de la position de FIFO (par exemple avant ou après le décodeur de parole).

La mise en oeuvre de ces techniques de suppression, totale ou partielle, est simple lorsque la FIFO est placée avant le décodeur. Seule la valeur de $S_{FIFO}$ doit être choisie de façon pertinente afin d'une part de conserver un nombre suffisant de paquets, et d'autre part de ne pas introduire une saturation de la FIFO, ce qui allongerait l'effet d'une rafale sur la qualité du signal restitué. Toutefois, les paquets sont supprimés sans avoir connaissance a priori de leur contenu.

La conception des systèmes peut prévoir une relation entre la FIFO et le système de restitution pour envisager des suppressions de paquets en fonction de leur contenu. Parfois, on pourra se contenter d'une lecture partielle du paquet (avec un décodage partiel, par exemple pour obtenir le gain audio du signal, une information de voisement, ...)

pour sélectionner judicieusement des paquets à supprimer. Un positionnement de la FIFO après le décodeur de parole simplifie la suppression de paquets en fonction de leur contenu.

D'autres particularités et avantages de la présente invention apparaîtront dans la description ci-après d'exemples de réalisation non limitatifs, en référence aux dessins annexés, dans lesquels :

- les figures 1 à 4 sont des schémas synoptiques d'équipements où l'invention trouve application;
- la figure 5 est un organigramme illustrant une réalisation de la détection et de l'évaluation de rafales excessives selon l'invention; et
- les figures 6 à 13 sont des diagrammes temporels illustrant diverses techniques de suppression de paquets utilisables conformément à l'invention.

L'invention est décrite ci-après dans son application, non limitative, à la transmission de voix sur IP (VOIP) en utilisant le protocole RTP aux extrémités pour gérer les aspects temporels de la transmission sur le réseau asynchrone. On relèvera que les principes décrits sont transposables à d'autres applications de transmission sur des réseaux asynchrones. Le procédé ci-après peut être mis en oeuvre dans l'une quelconque des configurations illustrées par les figures 1 à 4, ou dans toute autre configuration appropriée.

On note $\delta$ la période d'émission des paquets IP/UDP/RTP par l'émetteur et $CR_\theta$ la capacité de réception sur le réseau, c'est-à-dire le nombre de paquets que peut recevoir le récepteur pendant une durée $\theta$. La durée $\theta$ considérée ici pour la gestion de la FIFO de gigue correspond à la période $\delta$, pour simplifier l'exposé de l'invention, la capacité de réception réseau étant donc exprimée par $CR_\delta$. Cependant, on notera que cette gestion peut également se fonder sur la durée L de la trame de base du codeur-décodeur (un paquet pouvant contenir plusieurs trames), ou encore sur une notion locale de "trame récepteur" correspondant à un bloc lu dans la FIFO.

Dans le cas de la VOIP, les paquets IP transmis contiennent des trames de signal audio de longueur fixe émis périodiquement. Par exemple, pour une communication en G.723.1 avec une trame par paquet, les paquets contenant chacun L = 30 ms de signal sont émis de manière régulière, soit un paquet toutes les $\delta$ = L = 30 ms.

Au niveau du récepteur, $\delta$ étant connu ainsi que la taille des paquets, on peut estimer le retard, ou gigue, $w_n$ d'un paquet (n) par rapport au précédent (n-1). Si le paquet n-1 est arrivé à l'instant $T_{n-1}$ et le paquet n à l'instant $T_n$, cette gigue $w_n$ vaut généralement:

$$w_n = T_n - (T_{n-1} + \delta) \qquad\qquad (1)$$

Si la gigue estimée $w_n$ est supérieure à environ $2\delta$ ou $3\delta$, le comportement classique d'un réseau de type IP fait qu'on peut s'attendre à recevoir une rafale.

La taille B de cette rafale, exprimée en nombre de paquets, peut alors être estimée par la formule:

$$B = \frac{w_n}{\delta} + 1 \qquad\qquad (2)$$

Cette estimation de $w_n$ et de B correspond à des conditions idéales d'émission régulière de données, et ne tient pas compte:

- de la transmission discontinue, qui engendre des périodes sans signal transmis, notamment en présence de mécanismes de VAD/DTX/CNG ("Voice Activity Detection / Discontinous Transmission / Comfort Noise Generation");
- des cas de perte de paquets; et
- des déséquencements éventuels.

Néanmoins, ces phénomènes peuvent être pris en compte dans l'estimation de la taille de la rafale.

Le mécanisme de VAD/DTX/CNG est basé sur un algorithme de détection d'activité vocale (VAD) qui fait arrêter l'émission du signal lorsque celui-ci ne contient que du bruit (silence) et reprendre cette émission sur un début de parole. Dans une mise en oeuvre courante de ce mécanisme, la dernière trame transmise avant une interruption est particulière: c'est une trame dite SID ("Silence Identifier") indiquant le passage en mode silence. Si le récepteur sait qu'il est en mode silence, le paquet n précédemment considéré correspond au paquet de reprise de parole, et donc le temps $T_n$ de réception n'est pas à mettre en relation avec le temps $T_{n-1}$, car un temps indéterminé $\tau$ correspondant à la longueur de la zone de bruit les sépare. De même, si la transmission discontinue est mise en oeuvre sans trame SID, le temps $T_n$ de réception n'est pas à mettre en relation directe avec le temps $T_{n-1}$.

Lorsqu'un tel mécanisme de VAD/DTX/CNG est activé ou peut l'être, le récepteur en a été informé lors de l'établissement de la communication, ou il prend en compte d'office cette éventualité. L'estampille temporelle RTP permet alors d'assurer la détection de la taille d'une éventuelle rafale. En effet, cette estampille temporelle indique, suivant une horloge définie par la RFC 1890 précitée, l'instant d'échantillonnage du premier échantillon représenté par le contenu du paquet. Ceci nous permet donc d'estimer le temps $\tau$. Si on note $ES_n$ l'estampille temporelle du paquet n, on a:

$$\tau = ES_n - (ES_{n-1} + \delta) \tag{3}$$

La gigue réelle du paquet n peut alors être estimée à partir de cette estimation de $\tau$:

$$w_n = T_n - (T_{n-1} + \delta) - \tau \tag{4}$$

Le paquet reçu juste après le paquet du numéro de séquence n-1, a un numéro de séquence p qui permet au récepteur de savoir s'il s'agit bien du paquet n suivant le paquet n-1 du point de vue de l'émetteur. Trois cas peuvent alors se présenter:

1/ p = n. Ce paquet est le paquet n attendu. Sa gigue est estimée comme précédemment, par la formule (1) ou la formule (4) si un mécanisme de VAD/DTX/CNG est utilisé.

2/ p < n-1. Ce paquet déséquencé est en général supprimé car trop ancien ou, si la gestion de FIFO le permet, remis à sa place. Quoiqu'il en soit, son temps d'arrivée n'est pas pris en compte. On attend le paquet suivant pour estimer sa gigue par rapport à l'instant $T_{n-1}$ d'arrivée du paquet n-1.

3/ p > n. On déduit de la réception de ce paquet que p-n paquets ont été perdus dans le réseau ou déséquencés. L'estimation de la gigue temporelle de ce paquet p arrivé à l'instant Tp est donnée par

$$w_p = T_p - (T_{n-1} + (p-n+1)\delta),$$

un retard $\tau$ pouvant aussi être pris en compte en cas de VAD/DTX/CNG.

On note que, lorsque l'estampille temporelle est présente, la gigue $w_p$ peut être estimée de la façon suivante dès lors que p > n-1:

$$w_p = (T_p - T_{n-1}) - (ES_p - ES_{n-1}) \tag{5}$$

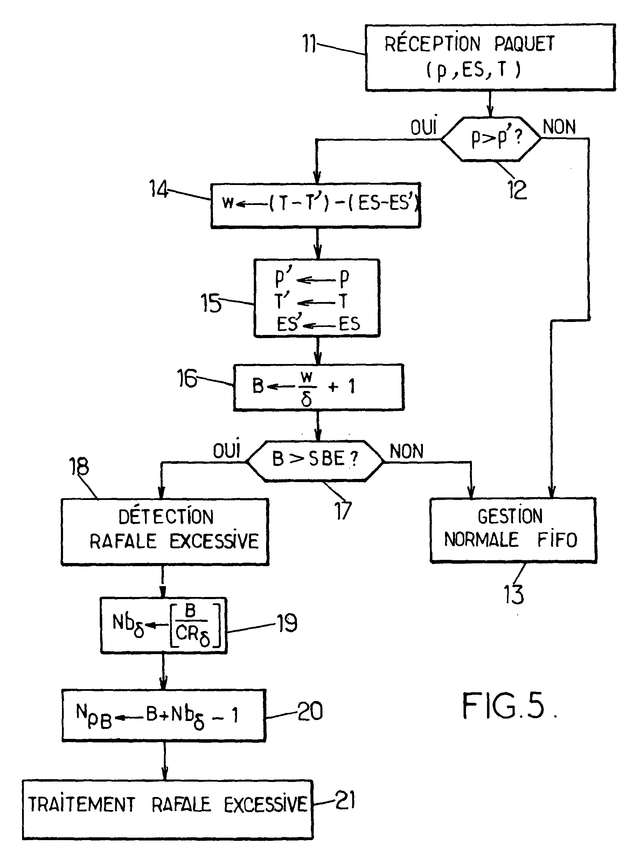

La figure 5 est un organigramme montrant un exemple de traitement que peut appliquer le module 7 de contrôle de la FIFO de gigue 6 pour détecter une éventuelle rafale excessive à réception d'un paquet IP/UDP/RTP. La réception 11 du paquet est signalée par le module de dépaquétisation 2 qui relève le numéro de séquence p et l'estampille temporelle ES présents dans ce paquet ainsi que l'heure de réception T, et adresse ces trois paramètres p, ES, T au module de contrôle 7.

Le module 7 garde en mémoire les valeurs p' (n-1), ES' ($ES_{n-1}$) et T' ($T_{n-1}$) de ces trois paramètres qui ont été relevées à l'arrivée du précédent paquet (hors paquets déséquencés). Les numéros de séquence p et p' sont comparés à l'étape 12. Si p ≤ p' (cas 2/ ci-dessus), le module 7 applique le mode de gestion normale de la FIFO de gigue 6 (étape 13), c'est-à-dire par exemple qu'il commande l'enregistrement du paquet à l'emplacement approprié de la FIFO, sauf en cas de trop grand déséquencement auquel cas il détruit le paquet.

Si p > p' d'après le test 12, le module 7 procède à l'estimation de la gigue w = $w_p$ conformément à la formule (5) à l'étape 14, puis met à jour les variables p', ES' et T' avec les dernières valeurs p, ES et T à l'étape 15. La taille de rafale B peut alors être estimée à l'étape 16 selon la formule (2). La détection de rafale excessive proprement dite résulte du test 17 ou la taille de rafale estimée B est comparée au seuil SBE. Si le seuil n'est pas atteint, la gestion normale 13 de la FIFO est appliquée, c'est-à-dire par exemple que le module 7 commande l'enregistrement du paquet à l'emplacement approprié de la FIFO. Si B > SBE au test 17, la rafale est détectée comme étant excessive (étape 18) et le module de contrôle 7 entre dans un mode de gestion adapté à ces rafales excessives.

Dans certains cas, la détection des rafales excessives peut être confortée par l'indication depuis l'interface réseau 1 de la présence de plusieurs paquets à traiter pendant l'intervalle de temps $\delta$.

Suivant la taille B de la rafale détectée comme excessive, les paquets de la rafale peuvent être reçus quasi-simultanément, c'est-à-dire pendant un laps de temps inférieur à δ, ou reçus sur plusieurs périodes δ. Cette réception dépend du débit des routeurs IP, mais aussi de la capacité de réception $CR_\delta$ de l'interface réseau 1. Ces informations ne sont généralement pas connues par l'application. Le débit de réception des routeurs ne peut de toute façon pas être utilisé, car on ne peut pas savoir quel(s) routeur(s) indui(sen)t le retard.

En revanche, l'information $CR_\delta$ concernant la capacité de réception de l'interface réseau peut être estimée de façon approximative par l'application. En effet, lorsqu'un paquet fortement retardé arrive enfin à destination, le récepteur dispose au bout d'un temps δ du nombre Mb de paquets reçus pendant ce temps δ. Pour avoir une idée de la capacité de réception $CR_\delta$ de l'interface réseau, on peut prendre $CR_\delta$ = Mb.

Une telle estimation de $CR_\delta$ est approximative. Elle est minorée si le nombre de paquets B constituant la rafale est inférieur à la capacité réelle de réception de l'interface réseau. C'est pourquoi on cherche le maximum des valeurs Mb observées au cours de la communication, afin d'approcher au mieux cette capacité de réception $CR_\delta$. Le module de contrôle 7 observe donc le nombre Mb de paquets reçus pendant le temps δ suivant la détection d'une rafale excessive, et il prendra comme nouvelle valeur de $CR_\delta$ (pour la rafale suivante) le maximum entre Mb et la précédente valeur de $CR_\delta$.

Cette information de capacité de réception permet de déterminer à l'étape 19 le nombre $Nb_\delta$ de périodes δ nécessaires à la réception complète des paquets de la rafale en cours:

$$Nb_\delta = \left\lceil \frac{B}{CR_\delta} \right\rceil \tag{6}$$

où $\lceil x \rceil$ désigne l'entier égal ou immédiatement supérieur à x.

Pendant ces $Nb_\delta$ périodes, l'émetteur délivre autant de paquets supplémentaires qui, si les choses se passent normalement, seront reçus immédiatement après l'arrivée complète de la rafale. Avant que la réception reprenne un rythme quasi-normal, le récepteur devra alors gérer un nombre de paquets $N_{PB}$ potentiellement plus grand que B, évalué à l'étape 20 par:

$$N_{PB} = B + Nb_\delta - 1 \tag{7}$$

Différentes actions sont ensuite applicables pour le traitement 21 des rafales excessives.

Une première possibilité consiste à détruire globalement les B paquets de la rafale. Cette solution est relativement radicale car du signal utile peut être contenu dans ces B paquets consécutifs.

Une seconde possibilité consiste à détruire les k premiers paquets de la rafale, ou les k derniers. Le nombre k < B est alors choisi afin que la reprise de la communication se fasse avec un retard minimal, fixé par une valeur cible $S_{FIFO}$.

Pour gagner en souplesse, on peut utiliser une détection d'activité vocale afin de supprimer uniquement les trames contenant du signal de bruit. Cette solution peut permettre de supprimer environ 60% du signal contenu dans les B paquets de la rafale. Si ceci ne suffit pas, d'autres paquets de la rafale seront détruits.

Une autre solution proposée consiste à détecter la fin d'un mot, à conserver le signal jusque là et à supprimer la suite. Cette solution permet de garder une partie d'information cohérente contenue dans la rafale.

Toutes autres combinaisons de destruction de ces paquets peuvent être envisagées. Par exemple on peut supprimer un paquet sur deux de la rafale. Ces solutions relativement brutales peuvent s'avérer utiles lorsque la puissance de calcul du récepteur ne permet pas la mise en place d'algorithmes plus complexes pour améliorer la gestion de cette surabondance de trames.

La valeur cible $S_{FIFO}$ correspond au nombre de paquets que l'on souhaite avoir dans la FIFO à la fin du traitement de la rafale excessive, c'est-à-dire au moment où on prévoit que le réseau revienne dans un mode normal de fonctionnement après la forte perturbation qui a entraîné la rafale excessive. De la même manière que pour le seuil SBE, la valeur cible $S_{FIFO}$ pourra être fixe ou adaptative et déterminée en fonction du type d'application et du comportement du réseau.

Une possibilité est de la fixer égale au remplissage moyen de la FIFO, estimé dans les phases où le réseau n'engendre que des perturbations normales (pas de rafale excessive, mode de gestion de l'étape 13).

L'objectif général est de supprimer au moins B - $S_{FIFO}$ paquets de la rafale détectée comme excessive. Dans le cas où B > $CR_\delta$, la reprise de l'état normal du réseau intervient dès la période δ suivante, et dans ces conditions la reprise se fait bien avec $S_{FIFO}$ paquets dans la FIFO 6.

Dans le cas où B > $CR_\delta$, le traitement de la rafale va s'étaler sur $Nb_\delta$ périodes pendant lesquelles du son devra être restitué. Idéalement, on restituerait du son réel, la suppression de B - $S_{FIFO}$ paquets permettant de conserver $Nb_\delta$ paquets à jouer pendant la réception de la rafale, ainsi que $S_{FIFO}$ paquets pour assurer l'état désiré de la FIFO en fin de rafale. Pour garantir la restitution de son réel, les $Nb_\delta$ paquets sont à puiser dans les premiers paquets de la rafale à concurrence de $CR_\delta$ paquets. Si $Nb_\delta$ > $CR_\delta$, cette opération devra être répétée autant de fois que nécessaire dans la ou les périodes δ suivantes pour éviter la génération de paquets de substitution. Toutefois, si une technique de suppression entraînant la génération de PS paquets de substitution est préférée, cela reviendra à augmenter d'autant la taille perçue de la rafale. Pour tenir le critère de $S_{FIFO}$ paquets dans la FIFO en fin de rafale, B - $S_{FIFO}$ - PS paquets devront alors être supprimés de la rafale.

Le traitement 21 préféré est celui où on tient compte des propriétés du signal contenu dans la rafale. Toutefois, si l'accès à ces informations n'est pas possible ou trop complexe, on pourra préférer une technique qui permet d'éviter d'avoir à générer des paquets de substitution.

Pendant la suppression des paquets de la rafale, il convient d'être vigilant par rapport aux phénomènes de transmission discontinue, aux pertes de paquets et au déséquencement, qui vont entraîner une diminution de la taille réelle de la rafale. Ces phénomènes ne pouvant être pris en compte que lors de la détection sur les paquets concernés de la rafale, cela pourra entraîner finalement moins de $S_{FIFO}$ paquets dans la FIFO. Mais l'objectif principal d'éviter un impact trop fort et trop durable de la rafale excessive sera respecté. En effet, si par exemple certains des $S_{FIFO}$ derniers paquets de la rafale ont été perdus alors que les premiers ont déjà été supprimés, seuls les paquets non perdus parmi les $S_{FIFO}$ derniers paquets de la rafale seront conservés.

Une façon de pallier ceci est de prévoir un tampon FIFO intermédiaire de $S_{FIFO}$ paquets en amont de la FIFO de gigue, qu'on fait glisser sur la zone idéale à conserver finalement dans la FIFO de gigue en fonction de la détection ou pas de ces phénomènes de transmission discontinue, de perte et de déséquencement. Dans l'exemple précédent, on place alors dans le tampon intermédiaire les $S_{FIFO}$ premiers paquets valides, et on continue la lecture des informations des paquets de la rafale, en décalant la décision de suppression des paquets de $S_{FIFO}$ paquets. Le premier paquet de la rafale est supprimé si l'on constate que le ($S_{FIFO}$+1 )-ième paquet est bien présent dans la rafale, et ainsi de suite jusqu'aux $S_{FIFO}$ derniers paquets de la rafale.

Les exemples qui suivent exposent plus précisément quelques unes des techniques de suppression de paquets de rafales excessives dont le principe général vient d'être décrit.

La technique de suppression totale peut être utilisée lorsqu'une rafale de taille importante est reçue pendant un ou plusieurs intervalle de lecture dans la FIFO de gigue 6. La suppression totale signifie que $S_{FIFO}$ = 0. Deux cas correspondant aux exemples 1 et 2 peuvent se présenter.

Dans le cas où $S_{FIFO}$ > 0 (cette valeur $S_{FIFO}$ est définie de façon statique ou dynamique, suivant les conditions réseau et/ou l'application visée), une suppression partielle doit être envisagée. Plusieurs techniques sont possibles: la première supprime les B - $S_{FIFO}$ premiers paquets reçus de la rafale, la seconde supprime les B - $S_{FIFO}$ derniers paquets reçus de la rafale, d'autres techniques pourrait conserver k1 premiers paquets et k2 = B - $S_{FIFO}$ - k1 derniers paquets, ou une toute autre combinaison de suppression respectant la valeur de $S_{FIFO}$. Dans la mesure du possible, très peu de paquets de substitution (voire aucun) doivent être générés en plus de ceux créés pendant l'interruption de réception précédant la rafale, car en présence de vrai signal il est préférable d'utiliser celui-ci, plutôt qu'un signal de substitution.

Exemple 1: Suppression totale, avec $CR_\delta \geq B$

Le cas où $CR_\delta \geq B$ est généralement le plus probable lors de l'utilisation d'une connexion directe au niveau de l'interface réseau 1, par exemple à l'aide d'une carte réseau Ethernet à 10 Mbit/s (IEEE 802.3).

On considère l'utilisation du codeur/décodeur G.723.1, les paquets consistant chacun en deux trames (δ = 2L) et étant émis à une périodicité de δ = 60 ms. Un paquet fait alors 48 octets pour le codage du signal audio + 40 octets d'en-tête IP/UDP/RTP + 26 octets d'en-tête IEEE 802.3, soit 912 bits. La carte réseau est capable de recevoir environ $CR_\delta$ = $\lfloor$ 10000000 $\times$ 0,06/912 $\rfloor$ = 657 paquets en 60 ms ($\lfloor$ x $\rfloor$ désigne l'entier égal ou immédiatement inférieur à x), soit une durée de signal de 657 $\times$ 0,06 = 39,42 s, très supérieure aux retards introduits par le réseau. La totalité des paquets de la rafale sera donc reçue en un seul cycle de l'horloge de lecture dans la FIFO. La suppression sera immédiate. Le paquet reçu en premier après la rafale pourra être placé dans la FIFO de gigue 6 par le module de contrôle 7 et la communication se poursuivra.

Exemple 2: Suppression totale, avec $CR_\delta$ < B

Le cas où $CR_\delta$ < B se rencontre typiquement lorsque l'interface réseau 1 comporte un modem. La plupart des modems actuels autorisent une connexion à 56 kbit/s, ce qui limite le choix des codeurs/décodeurs vocaux à des débits relativement faibles. En reprenant les données de l'exemple précédent, un paquet fait 48 octets pour le codage du signal audio + 40 octets d'en-tête IP/UDP/RTP, soit 704 bits. Le modem est capable de recevoir environ $CR_\delta = \lfloor 56000 \times 0,06/704 \rfloor = 4$ paquets en 60 ms, ce qui correspond à $4 \times 60 = 240$ ms de signal audio. Des retards supérieurs à cette durée sont très courants sur Internet. La totalité des B paquets de la rafale est alors reçue en plusieurs cycles de l'horloge de lecture dans la FIFO, pendant lesquels le module de contrôle 7 commande la production de trames de correction, car aucun des paquets reçus ne sera restitué ni même écrit dans la FIFO.

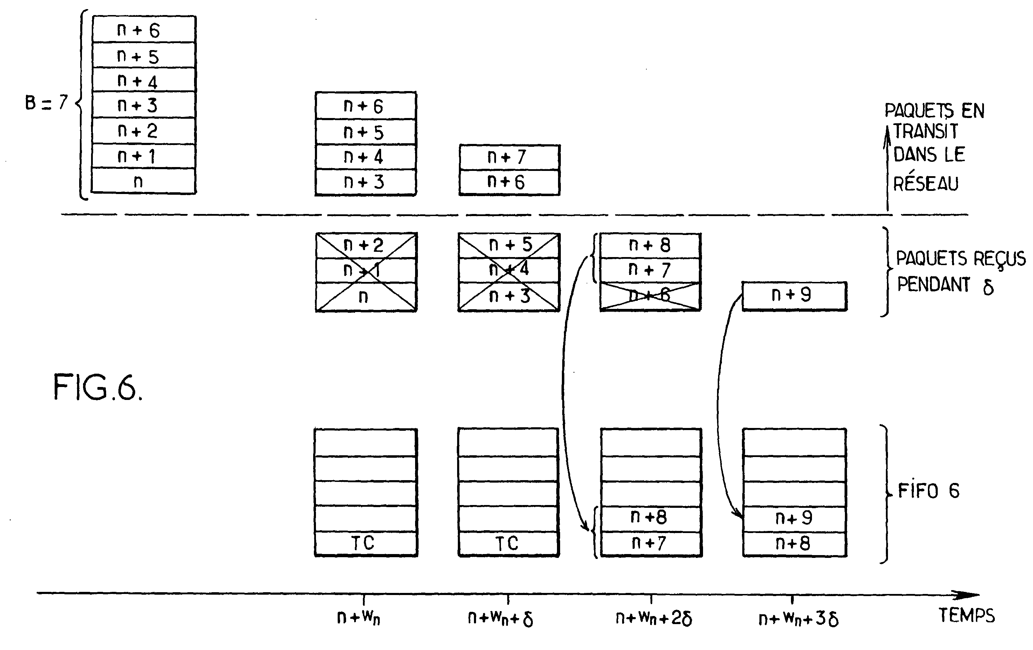

La figure 6 illustre cet exemple dans le cas où $CR_\delta = 3$ et $B = 7$ ($Nb_\delta = 3$), avec une FIFO de gigue 6 de taille $L_{FIFO} = 5$ en nombre de paquets. Il est considéré ici, comme dans tous les exemples qui suivent, que les paquets sont traités au fur à fûr de leur mise à disposition par l'interface réseau de l'application, à concurrence de $CR_\delta$ paquets par période $\delta$. La décision de placer finalement ces paquets dans la FIFO dépendant du résultat du traitement choisi.

La technique de suppression totale implique, après la rupture de $B.\delta$ secondes pendant laquelle la rafale s'accumule dans le réseau, la génération de

$$N_{TC} = \left\lfloor \frac{B}{CR_\delta} \right\rfloor$$

trames de correction, notées TC sur le dessin où $N_{TC} = 2$. Cette valeur $N_{TC}$ est un minimum car les conditions prévalant dans le réseau asynchrone peuvent encore retarder l'arrivée des $Nb_\delta$ paquets émis après la rafale.

Exemple 3: <u>Suppression partielle des B - $S_{FIFO}$ premiers paquets, avec $CR_\delta \geq B$</u>

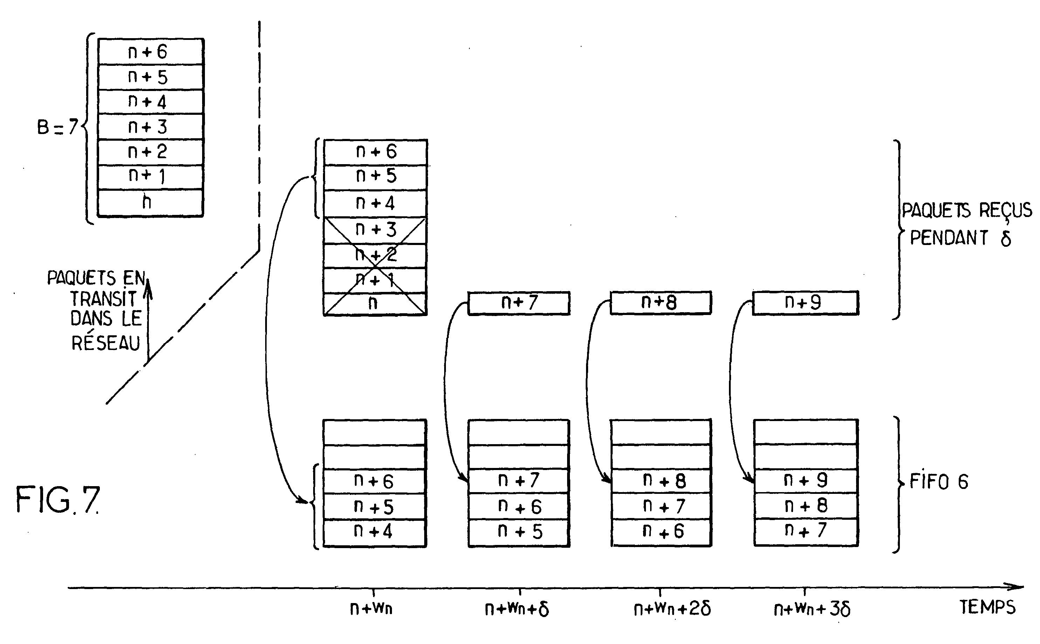

La figure 7 illustre cet exemple, dans un cas où $B = 7 < CR_\delta$ et $S_{FIFO} = 3$.

Exemple 4: <u>Suppression partielle des B - $S_{FIFO}$ derniers paquets, avec $CR_\delta \geq B$</u>

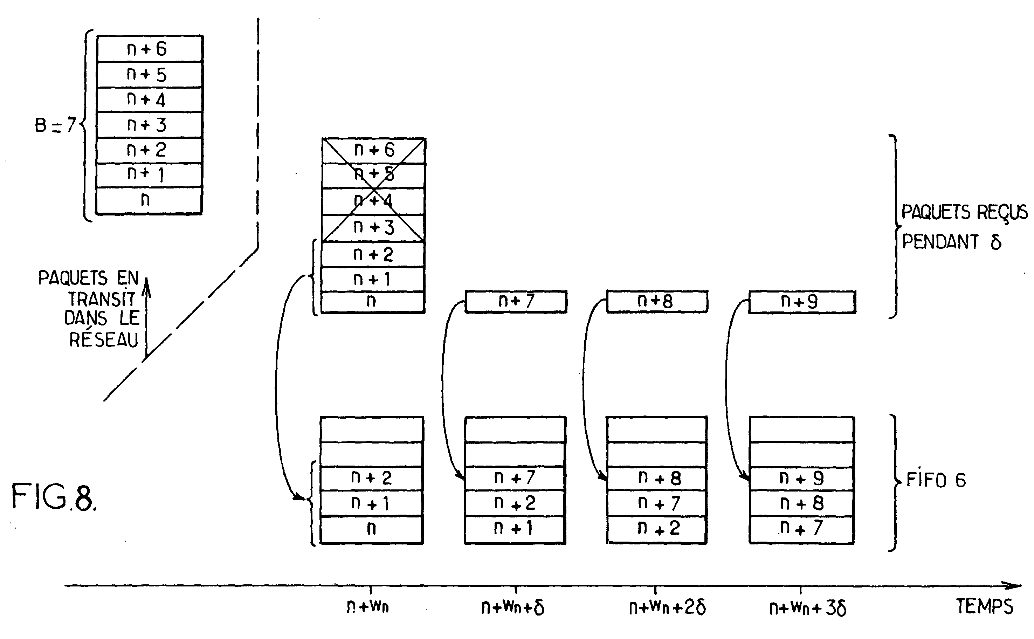

La figure 8 illustre cet exemple, dans un cas où $B = 7 < CR_\delta$ et $S_{FIFO} = 3$.

Exemple 5: <u>Suppression partielle des B - $S_{FIFO}$ premiers paquets, avec $CR_\delta < B$ et $CR_\delta \leq L_{FIFO}$</u>

Dans les techniques de suppression partielle lorsque $CR_\delta < B$, la taille de la rafale vue du récepteur est augmentée du nombre

$$N_{PG} = \left\lfloor \frac{B - S_{FIFO}}{CR_\delta} \right\rfloor$$

de paquets de substitution générés pendant l'arrivée de la rafale. Le nombre de paquets à supprimer est finalement $B + N_{PG} - S_{FIFO}$, et le nombre de paquets conservés de la rafale est $S_{FIFO} - N_{PG}$.

La capacité de réception $CR_\delta$ peut être soit inférieure soit supérieure à la taille $L_{FIFO}$ de la FIFO de gigue 6.

Quand $CR_\delta \leq L_{FIFO}$, les paquets reçus au premier cycle d'horloge pourront être stockés dans la FIFO sans saturer celle-ci, et une trame pourra alors être restituée. Aux cycles suivants, le taux de remplissage de la FIFO ne permettra pas de conserver la totalité des paquets reçus;

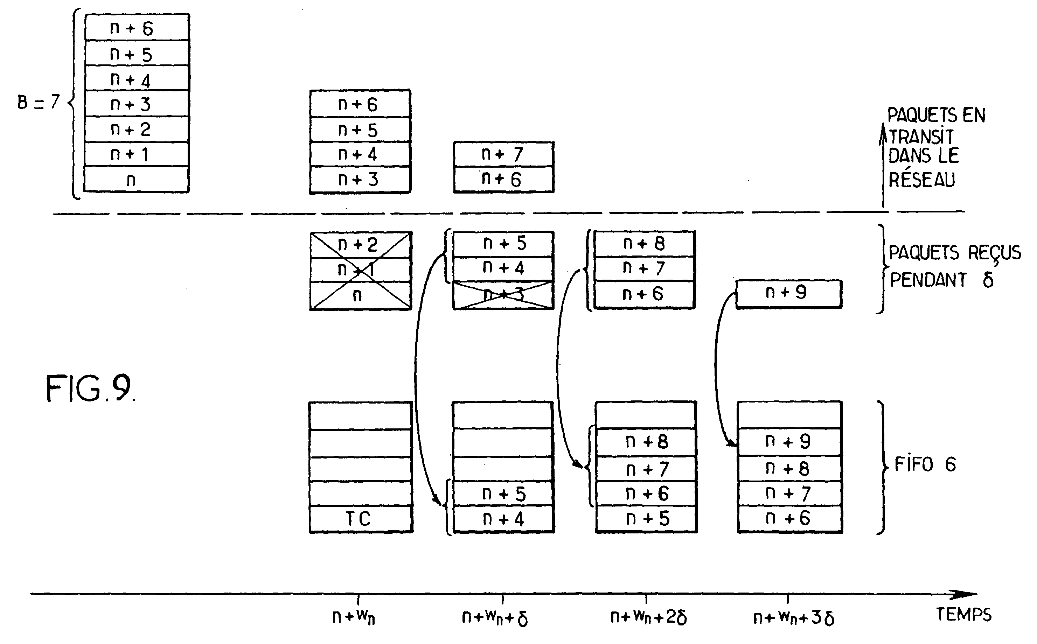

La technique de suppression des B - $S_{FIFO}$ premiers paquets est illustrée par la figure 9 dans un cas où $B = 7$, $CR_\delta = 3$, $S_{FIFO} = 4$ et $L_{FIFO} = 5$. Dans cet exemple, il est généré $N_{PG} = 1$ paquet de substitution provoquant la suppression du paquet supplémentaire n+3 au deuxième cycle d'horloge suivant la détection de la rafale.

Exemple 6: <u>Suppression partielle des B - $S_{FIFO}$ derniers paquets, avec $CR_\delta < B$ et $CR_\delta \leq L_{FIFO}$</u>

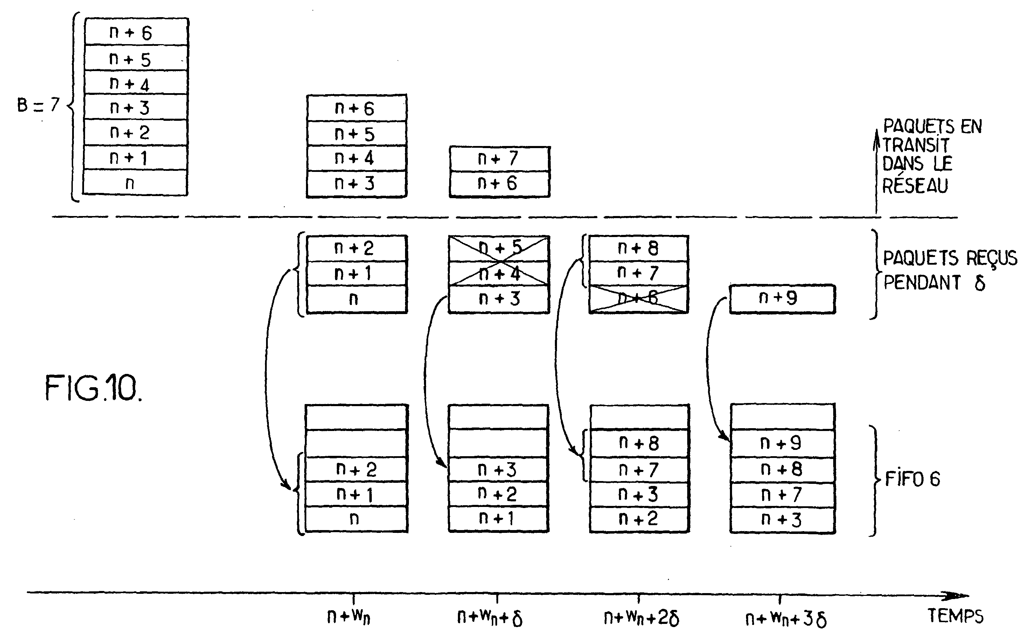

Cette technique est illustrée par la figure 10 dans un cas où $B = 7$, $CR_\delta = 3$, $S_{FIFO} = 4$ et $L_{FIFO} = 5$.

Une valeur insuffisante de $L_{FIFO}$ peut entraîner une saturation de la FIFO après le premier cycle d'horloge suivant le début de la rafale. Certains paquets appartenant à la rafale pourront alors être supprimés en plus des B - $S_{FIFO}$ suppressions souhaitées. Une rupture du signal de $(B - S_{FIFO}).\delta$ secondes intervient en fin de réception des paquets de la rafale.

Pour l'interactivité de l'application, il est généralement préférable que la rupture du signal intervienne en début plutôt qu'à la fin du traitement de la rafale (figure 9 plutôt que figure 10). Cependant, la suppression en début de rafale a pour inconvénient de causer la production locale de paquets de substitution dès que $B - S_{FIFO} \geq CR_{\delta}$ ($N_{PG} \geq 1$). Un compromis avantageux peut être réalisé en adaptant la technique de l'exemple 5 de la façon suivante:

- lorsque la rafale excessive est détectée, le module de contrôle 7 évalue

$$N_{PG} = \left\lfloor \frac{B - S_{FIFO}}{CR_{\delta}} \right\rfloor,$$

qui représente, en nombre de paquets, la quantité de signal qui pourrait manquer à cause de l'état vide de la FIFO 6 au cours du traitement de la rafale si la partie supprimée était placée au début de la rafale détectée;
- si $N_{PG} = 0$, les $B - S_{FIFO}$ premiers paquets de la rafale sont supprimés;
- si $N_{PG} = 1$, un des $CR_{\delta}$ premiers paquets de la rafale est conservé pour restituer dans la première période $\delta$ un signal qui a effectivement été émis de préférence à un signal de substitution. Le paquet conservé peut notamment être le premier (ce qui revient à garder le paquet n à la place du paquet de substitution TC dans l'illustration de la figure 9). Les $B - S_{FIFO}$ paquets suivants (n+1, n+2 et n+3 dans illustration de la figure 9) sont alors supprimés;
- si $N_{PG} > 1$, on conserve $N_{PG}$ paquets parmi les $B - S_{FIFO}$ premiers paquets de la rafale, dont au moins un des $CR_{\delta}$ premiers paquets. Une possibilité est de conserver les $N_{PG}$ premiers paquets de la rafale (si $N_{PG} \leq L_{FIFO}$) et de supprimer les $B - S_{FIFO}$ paquets suivants. Une autre possibilité est de conserver le premier des $CR_{\delta}$ paquets reçus au cours de chacune des $N_{PG}$ périodes $\delta$ suivant la détection de la rafale excessive.

Cette adaptation place la partie supprimée de la rafale excessive de façon à éviter que la FIFO 6 se retrouve vide au cours du traitement de la rafale, alors qu'il y a pléthore de paquets.

Exemple 7: <u>Suppression partielle des $B - S_{FIFO}$ premiers paquets, avec $L_{FIFO} < CR_{\delta} < B$</u>

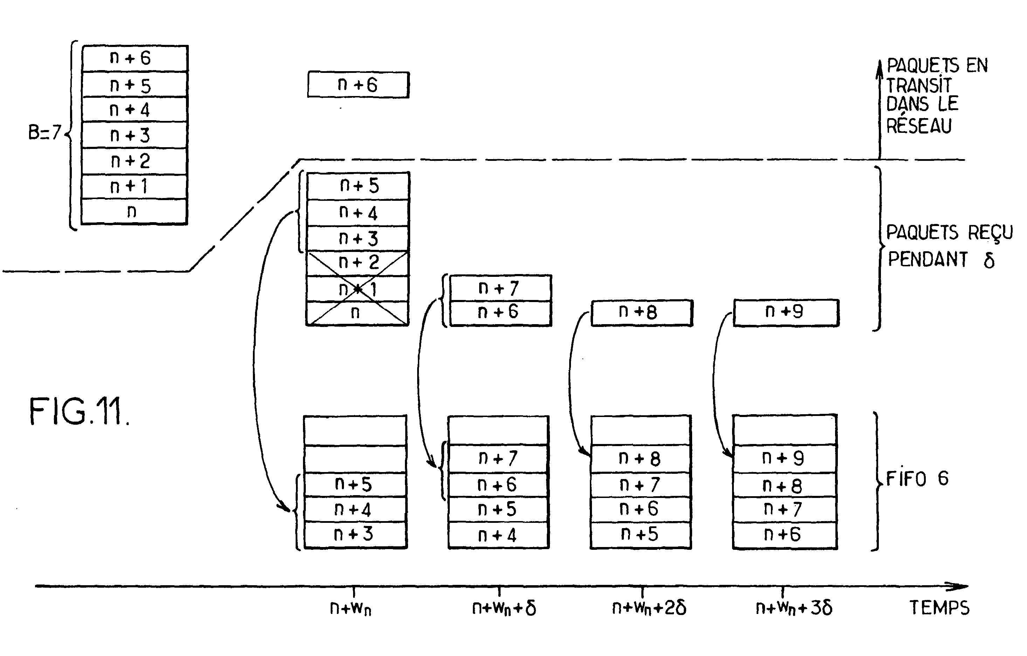

Quand $CR_{\delta} > L_{FIFO}$, une suppression de $CR_{\delta} - L_{FIFO}$ paquets sera nécessaire dès le premier cycle d'horloge suivant le début de la rafale. Aux cycles suivants, un paquet pourra alors être conservé sur les $CR_{\delta}$ nouveaux paquets présentés à la FIFO de gigue, mais avec une rupture du signal entre ce paquet et les paquets précédemment enregistrés dans la FIFO.
La technique de suppression des $B - S_{FIFO}$ premiers paquets est illustrée par la figure 11 dans un cas où $B = 7$, $CR_{\delta} = 6$, $S_{FIFO} = 4$ et $L_{FIFO} = 5$. On voit que cette technique peut permettre de ne pas générer de paquets de substitution supplémentaires dans le cas où $B - S_{FIFO} < CR_{\delta}$. Il se produit une rupture du signal de durée $(B - S_{FIFO})$. $\delta$ secondes au début de la rafale.
Lors du cycle d'horloge suivant la réception des $CR_{\delta}$ premiers paquets, il est possible que des paquets soient supprimés car la FIFO peut se trouver saturée. Dans le cas où le système de génération de paquet de substitution est performant, la valeur de $B - S_{FIFO}$ peut être supérieure à $CR_{\delta}$.

Exemple 8: <u>Suppression partielle des $B - S_{FIFO}$ derniers paquets, avec $L_{FIFO} < CR_{\delta} < B$</u>

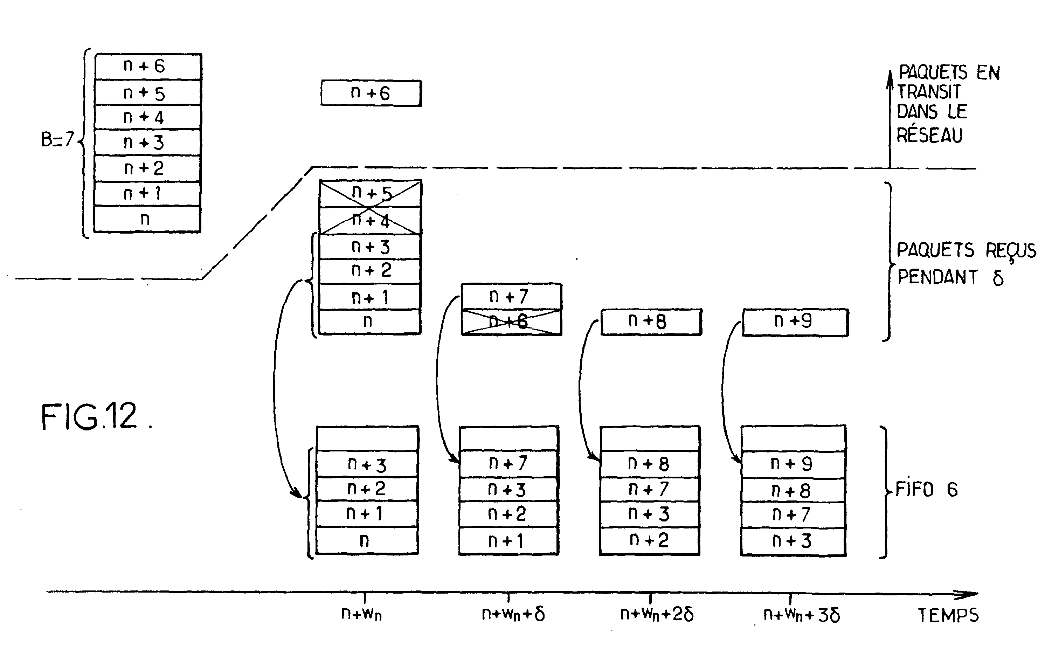

Le nombre $B - S_{FIFO}$ de paquets à supprimer peut ici être choisi plus aisément, et de façon à ne pas devoir générer de paquets de substitution au(x) cycle(s) d'horloge suivant le début de réception de la rafale.
La technique de suppression des $B - S_{FIFO}$ derniers paquets est illustrée par la figure 12 dans un cas où $B = 7$, $CR_{\delta} = 6$, $S_{FIFO} = 4$ et $L_{FIFO} = 5$. Une rupture du signal de $(B - S_{FIFO}).\delta$ secondes est également introduite, mais en fin de rafale.
Les techniques de suppression totale ou partielle des exemples 1 à 8 ne requièrent aucune connaissance a priori du contenu des trames par le module de contrôle 7. Ces techniques sont donc avantageusement utilisables lorsque la puissance de calcul disponible au récepteur limite la complexité des algorithmes de traitement du signal.
Ces techniques de suppression totale ou partielle peuvent être appliquées de façon semblable quand la FIFO de gigue 6 est placée avant (figures 2 et 4) ou après le décodeur audio 3 (figure 1). Elles sont même applicables en l'absence de décodeur audio (figure 3).
Le choix entre l'une de ces techniques peut résulter d'une configuration de l'équipement comportant la FIFO de gigue. Il peut aussi s'adapter à des souhaits exprimés par un utilisateur et/ou à l'évolution du comportement du réseau.
Lorsque c'est possible, il est cependant préférable que le module de contrôle 7 choisisse parmi les paquets de la rafale quels sont ceux qu'il est judicieux de conserver, afin d'éviter les irrégularités dues à la suppression brutale de signal ou de supprimer des paquets en fonction de leur contenu.

Une solution envisageable pour sélectionner les paquets à conserver consiste à utiliser une VAD permettant de supprimer préférentiellement des trames de bruit, ou du moins des trames ayant une plus grande probabilité que les autres de contenir du bruit. Le nombre de trames de signal supprimées est choisi pour conserver un nombre de trames de signal utile inférieur ou égal à l'équivalent de $S_{FIFO}$ paquets. Si ce n'est pas le cas, des trames de signal utile devront également être supprimées.

Dans une réalisation, la VAD porte sur le signal survenu juste avant le blanc correspondant à l'accumulation de la rafale dans le réseau. Si on sait que ce signal représente du bruit (silence), on privilégie une méthode de suppression en début de rafale (exemple 3, 5 ou 7), car il est probable que le silence se prolonge un peu au début de la rafale. Si par contre on détecte de la parole juste avant la rafale, on privilégie une méthode de suppression en fin de rafale (exemple 4, 6 ou 8) pour moins risquer de couper la fin d'une phrase. L'avantage de cette réalisation est que, la VAD étant effectuée a posteriori, il n'est pas nécessaire de faire une détection immédiate dès l'arrivée des paquets de la rafale.

Si les données de codage du signal contiennent une information sur l'état silence/parole, on peut extraire l'information de VAD des paquets reçus sans nécessairement avoir à décoder le signal. Mais ce n'est généralement pas le cas. L'accès à l'information de VAD requiert alors que la puissance de calcul disponible soit suffisante pour permettre un décodage au moins partiel des trames reçues avant de les écrire dans la FIFO de gigue.

Pour les techniques de suppression partielle, il est avantageux de conserver soit les premières trames allant jusqu'à une période de bruit (comparable à la suppression des B - $S_{FIFO}$ derniers paquets), soit les dernières trames de signal utile après une période de bruit (comparable à la suppression des B - $S_{FIFO}$ premiers paquets). Ces méthodes nécessitent d'une part que la puissance de calcul disponible au récepteur permette le décodage de certaines au moins des trames reçues pendant une période δ, et d'autre part qu'il dispose d'une fonction de VAD et d'un algorithme permettant de détecter le début ou la fin d'une phrase.

Il est également possible d'identifier, au sein même des trames conservées, des trames considérées comme du bruit, et de les supprimer afin de réduire davantage ce nombre de trames conservées.

Exemple 9: Suppression de B - $S_{FIFO}$ paquets choisis sur un critère de VAD, avec $L_{FIFO} < CR_\delta < B$

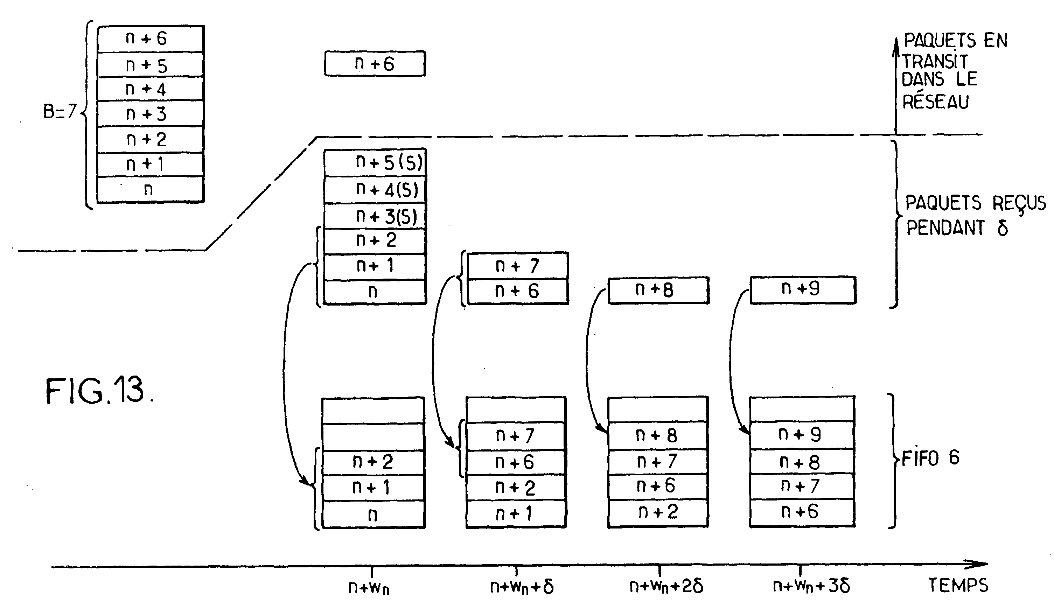

A titre d'exemple, la figure 13 présente une technique de suppression partielle de paquets en fonction de leur contenu dans le cas particulier où la FIFO 6 est placée après le décodeur de parole 3, dans un cas où B = 7, $CR_\delta$ = 6, $S_{FIFO}$ = 4 et $L_{FIFO}$ = 5. Sur cette figure, les paquets de rangs n+3, n+4 et n+5, marqués du symbole (S), ne contiennent pas de signal utile d'après un algorithme de VAD mis en oeuvre dans le décodeur 3. Il se peut que le nombre de paquets à supprimer ne soit pas suffisant, et une saturation de la FIFO peut survenir. Il convient donc de supprimer assez de paquets, au besoin parmi ceux contenant du signal utile.

**Revendications**

1. Procédé de traitement de paquets de données numériques reçus, contenant des données de description de segments temporels successifs d'un flux de signal à restituer, dans lequel on enregistre dans une mémoire tampon (6) des éléments obtenus à partir des paquets reçus, et on délivre en mode premier entré - premier sorti des éléments enregistrés dans la mémoire tampon, **caractérisé en ce qu'**on détecte a priori une rafale de paquets remplissant une condition de taille de rafale, sur la base d'un retard de réception évalué en réponse à la réception d'un premier paquet de la rafale, et **en ce qu'**on contrôle le contenu de la mémoire tampon en tenant compte de la détection de la rafale remplissant ladite condition de taille.

2. Procédé selon la revendication 1, dans lequel on évalue une taille de rafale (B) à l'arrivée d'un paquet, et la condition de taille est exprimée par une valeur de seuil à laquelle est comparée la taille de rafale évaluée.

3. Procédé selon la revendication 2, dans lequel le seuil est sélectionné en prenant en compte un type d'application et/ou le type du réseau et son comportement.

4. Procédé selon la revendication 2 ou 3, dans lequel l'évaluation de la taille de rafale est basée sur des paramètres comprenant l'instant d'arrivée des paquets.

5. Procédé selon la revendication 4, dans lequel les paramètres sur lesquels est basée l'évaluation de la taille de rafale comprennent en outre des paramètres inclus dans les paquets.

6. Procédé selon la revendication 5, dans lequel lesdits paramètres inclus dans les paquets comprennent un numéro de séquence et/ou une estampille temporelle inclus dans des paquets du protocole RTP.

7. Procédé selon l'une quelconque des revendications précédentes, dans lequel le contrôle du contenu de la mémoire tampon (6) comprend la prise en compte d'une valeur cible ($S_{FIFO}$) pour le remplissage de la mémoire tampon à la fin du traitement de la rafale détectée.

8. Procédé selon la revendication 7, dans lequel on détermine la valeur cible ($S_{FIFO}$) en fonction du remplissage de la mémoire tampon (6) dans des phases où il n'est pas détecté de rafales remplissant la condition de taille et/ou en fonction de l'application.

9. Procédé selon l'une quelconque des revendications précédentes, dans lequel le contrôle du contenu de la mémoire tampon (6) comprend la prise en compte d'une capacité de réception de paquets ($CR_\delta$) par un équipement incorporant la mémoire tampon.

10. Procédé selon la revendication 9, dans lequel on estime la capacité de réception de paquets ($CR_\delta$) comme un maximum des nombres de paquets reçus pendant une durée déterminée suivant chaque détection d'une rafale remplissant ladite condition de taille.

11. Procédé selon l'une quelconque des revendications précédentes, dans lequel le contrôle du contenu de la mémoire tampon (6) comprend la suppression d'au moins certains des éléments obtenus à partir des paquets de la rafale détectée, avant l'enregistrement desdits éléments dans la mémoire tampon.

12. Procédé selon la revendication 11, dans lequel on supprime tous les éléments obtenus à partir des paquets de la rafale détectée sans les enregistrer dans la mémoire tampon (6).

13. Procédé selon la revendication 11, dans lequel on supprime une partie seulement des éléments obtenus à partir des paquets de la rafale détectée sans les enregistrer dans la mémoire tampon (6).

14. Procédé selon la revendication 13, dans lequel on évalue la taille (B) de la rafale remplissant la condition de taille, et la partie supprimée représente une quantité de signal correspondant sensiblement à la différence entre une quantité de signal correspondant à la taille de rafale évaluée et une quantité de signal correspondant à une valeur cible ($S_{FIFO}$) pour le remplissage de la mémoire tampon à la fin de la rafale détectée.

15. Procédé selon la revendication 13 ou 14, dans lequel la partie supprimée est placée au début de la rafale détectée.

16. Procédé selon la revendication 13 ou 14, dans lequel la partie supprimée est placée à la fin de la rafale détectée.

17. Procédé selon la revendication 13 ou 14, dans lequel la partie supprimée est placée dans la rafale détectée en fonction d'une information d'activité du signal à restituer.

18. Procédé selon la revendication 17, dans lequel l'information d'activité du signal à restituer est obtenue après un décodage au moins partiel du contenu des paquets.

19. Procédé selon la revendication 13 ou 14, dans lequel la partie supprimée est placée de façon à éviter que la mémoire tampon (6) se trouve vide au cours du traitement de la rafale.

20. Procédé selon la revendication 19, dans lequel on évalue une quantité de signal qui pourrait manquer à cause d'un état vide de la mémoire tampon (6) au cours du traitement de la rafale si la partie supprimée était placée au début de la rafale détectée, et lorsque la quantité évaluée est non nulle, on place ladite partie dans la rafale détectée de façon à enregistrer dans la mémoire tampon des éléments obtenus à partir d'au moins un paquet reçu au début de la rafale détectée et représentant une quantité de signal au moins égale à la quantité évaluée.

21. Procédé selon l'une quelconque des revendications précédentes, dans lequel les éléments enregistrés dans la mémoire tampon (6) comprennent des données de codage du signal extraites des paquets reçus.

22. Procédé selon l'une quelconque des revendications 1 à 20, dans lequel les éléments enregistrés dans la mémoire tampon (6) comprennent des segments temporels du flux de signal à restituer, obtenus par décodage du contenu des paquets reçus.

**23.** Dispositif de réception de paquets de données numériques représentatifs de segments temporels successifs d'un signal à restituer, comprenant une mémoire tampon (6) organisée en mode premier entré - premier sorti pour recevoir des éléments obtenus à partir des paquets reçus, et des moyens pour contrôler le contenu de la mémoire tampon conformément à un procédé selon l'une quelconque des revendications précédentes.

**Claims**

**1.** Method of processing digital data packets received, containing description data for successive time segments of a signal stream to be restored, wherein elements obtained from the packets received are recorded in a buffer memory (6), and elements recorded in the buffer memory are delivered in first-in first out mode, **characterized in that** a burst of packets fulfilling a burst size condition is detected a priori on the basis of a reception delay evaluated in response to the reception of a first packet of the burst, and **in that** the content of the buffer memory is controlled by accounting for the detection of the burst fulfilling said size condition.

**2.** Method according to Claim 1, wherein a burst size (B) is evaluated upon arrival of a packet, and the size condition is expressed by a threshold value with which the evaluated burst size is compared.

**3.** Method according to Claim 2, wherein the threshold is selected by taking account of a type of application and/or the type of the network and its behavior.

**4.** Method according to Claim 2 or 3, wherein the evaluation of the burst size is based on parameters comprising the instant of arrival of the packets.

**5.** Method according to Claim 4, wherein the parameters on which the evaluation of the burst size is based further comprise parameters included in the packets.

**6.** Method according to Claim 5, wherein said parameters included in the packets comprise a sequence number and/ or a timestamp included in packets of the RTP protocol.

**7.** Method according to any one of the preceding claims, wherein the control of the content of the buffer memory (6) comprises taking into account a target value ($S_{FIFO}$) for the fill of the buffer memory at the end of the processing of the detected burst.

**8.** Method according to Claim 7, wherein the target value ($S_{FIFO}$) is determined as a function of the fill of the buffer memory (6) in phases where no bursts fulfilling the size condition are detected and/or as a function of the application.

**9.** Method according to any one of the preceding claims, wherein the control of the content of the buffer memory (6) comprises taking into account a packets reception capacity ($CR_{\delta}$) by a an item of equipment incorporating the buffer memory.

**10.** Method according to Claim 9, wherein the packets reception capacity ($CR_{\delta}$) is estimated as a maximum of the numbers of packets received over a determined duration following each detection of a burst fulfilling said size condition.

**11.** Method according to any one of the preceding claims, wherein the control of the content of the buffer memory (6) comprises deleting at least some of the elements obtained from the packets of the detected burst, before the recording of said elements in the buffer memory.

**12.** Method according to Claim 11, wherein all the elements obtained from the packets of the detected burst are deleted without recording them in the buffer memory (6).

**13.** Method according to Claim 11, wherein only part of the elements obtained from the packets of the detected burst is deleted without recording them in the buffer memory (6).

**14.** Method according to Claim 13, wherein the size (B) of the burst fulfilling the size condition is evaluated, and the deleted part represents a signal quantity corresponding substantially to the difference between a signal quantity corresponding to the evaluated burst size and a signal quantity corresponding to a target value ($S_{FIFO}$) for the fill of the buffer memory at the end of the detected burst.

15. Method according to Claim 13 or 14, wherein the deleted part is placed at the start of the detected burst.

16. Method according to Claim 13 or 14, wherein the deleted part is placed at the end of the detected burst.

17. Method according to Claim 13 or 14, wherein the deleted part is placed in the detected burst as a function of an activity cue of the signal to be restored.

18. Method according to Claim 17, wherein the activity cue of the signal to be restored is obtained after an at least partial decoding of the content of the packets.

19. Method according to Claim 13 or 14, wherein the deleted part is so placed as to prevent the buffer memory (6) from becoming empty while the burst is processed.

20. Method according to Claim 19, wherein a signal quantity which could be missing on account of an empty state of the buffer memory (6) while the burst is processed if the deleted part was placed at the start of the detected burst is evaluated, and when the evaluated quantity is non zero, said part is placed in the detected burst in such a way as to record in the buffer memory elements obtained from at least one packet received at the start of the detected burst and representing a signal quantity at least equal to the evaluated quantity.

21. Method according to any one of the preceding claims, wherein the elements recorded in the buffer memory (6) comprise signal coding data extracted from the packets received.

22. Method according to any one of Claims 1 to 20, wherein the elements recorded in the buffer memory (6) comprise time segments of the signal stream to be restored, obtained by decoding the content of the packets received.

23. Device for receiving digital data packets representative of successive time segments of a signal to be restored, comprising a buffer memory (6) organized in first-in first-out mode so as to receive elements obtained from the packets received, and means for controlling the content of the buffer memory in accordance with a method according to any one of the preceding claims.

**Patentansprüche**

1. Verfahren zur Verarbeitung von empfangenen Paketen numerischer Daten, wobei die Pakete Beschreibungsdaten von aufeinanderfolgenden Zeitsegmenten eines wiederzugebenden Signalflusses enthalten, wobei beim Verfahren aus den empfangenen Paketen erhaltene Elemente in einem Pufferspeicher (6) gespeichert werden, und in einem first-in-first-out-Modus im Pufferspeicher gespeicherte Elemente geliefert werden, **dadurch gekennzeichnet, dass** a priori ein Bündel von Paketen, welches eine Bedingung einer Bündelgröße erfüllt, auf Basis einer Empfangsverzögerung erfasst wird, welche in Antwort auf den Empfang eines ersten Pakets des Bündels ermittelt wird, und dass der Inhalt des Pufferspeichers überwacht wird, indem die Erfassung des die Größenbedingung erfüllenden Bündels berücksichtigt wird.

2. Verfahren nach Anspruch 1, bei dem eine Bündelgröße (B) beim Eintreffen eines Pakets ermittelt wird, und die Größenbedingung durch einen Schwellwert ausgedrückt wird, mit welchem die ermittelte Bündelgröße verglichen wird.

3. Verfahren nach Anspruch 2, bei dem die Schwelle unter Berücksichtigung eines Applikationstyps und/oder des Netzwerktyps und seinem Verhalten ausgewählt wird.

4. Verfahren nach Anspruch 2 oder 3, bei dem die Ermittlung der Bündelgröße auf Parametern basiert, welche den Zeitpunkt des Eintreffens der Pakete umfassen.

5. Verfahren nach Anspruch 4, bei dem die Parameter, auf denen die Ermittlung der Bündelgröße basiert, ferner in den Paketen enthaltene Parameter umfassen.

6. Verfahren nach Anspruch 5, bei dem in den Paketen enthaltenen Parameter eine Sequenznummer und/oder eine zeitliche Markierung umfassen, welche in Paketen des RTP-Protokolls enthalten sind.

7. Verfahren nach einem der vorhergehenden Ansprüche, bei dem die Überwachung des Inhalts des Pufferspeichers (6) die Berücksichtigung eines Zielwerts ($S_{FIFO}$) für das Füllen des Pufferspeichers am Ende der Verarbeitung des erfassten Bündels umfasst.

8. Verfahren nach Anspruch 7, bei dem der Zielwert ($S_{FIFO}$) in Funktion des Füllens des Pufferspeichers (6) in Phasen, in denen keine die Größenbedingung erfüllende Bündel erfasst werden, und/oder in Funktion der Applikation bestimmt wird.

9. Verfahren nach einem der vorhergehenden Ansprüche, bei dem die Überwachung des Inhalts des Pufferspeichers (6) die Berücksichtigung einer Paketempfangskapazität ($CR_\delta$) durch ein den Pufferspeicher einschließendes Element umfasst.

10. Verfahren nach Anspruch 9, bei dem die Paketempfangskapazität ($CR_\delta$) als ein Maximum der Anzahl von empfangenen Paketen während einer Zeitdauer geschätzt wird, welche anschließend an jede Erfassung eines die Größenbedingung erfüllenden Bündels bestimmt wird.

11. Verfahren nach einem der vorhergehenden Ansprüche, bei dem die Überwachung des Inhalts des Pufferspeichers (6) das Unterdrücken wenigstens bestimmter aus den erfassten Paketen des Bündels erhaltener Elemente umfasst, und zwar vor dem Speichern der Elemente im Pufferspeicher.

12. Verfahren nach Anspruch 11, bei dem alle aus den erfassten Paketen des Bündels erhaltene Elemente unterdrückt werden, ohne dass sie im Pufferspeicher (6) gespeichert werden.

13. Verfahren nach Anspruch 11, bei dem nur ein Teil der aus den erfassten Paketen des Bündels erhaltenen Elemente unterdrückt wird, ohne dass sie im Pufferspeicher (6) gespeichert werden.

14. Verfahren nach Anspruch 13, bei dem die die Größenbedingung erfüllende Bündelgröße (B) ermittelt wird und der unterdrückte Teil eine Signalgröße darstellt, welche im wesentlichen der Differenz zwischen einer der erfassten Bündelgröße entsprechenden Signalgröße und einer Signalgröße entspricht, die einem Zielwert ($S_{FIFO}$) für das Füllen des Pufferspeichers am Ende des erfassten Bündels entspricht.

15. Verfahren nach Anspruch 13 oder 14, bei dem der unterdrückte Teil an den Anfang des erfassten Bündels platziert wird.

16. Verfahren nach Anspruch 13 oder 14, bei dem der unterdrückte Teil, an das Ende des erfassten Bündels platziert wird.

17. Verfahren nach Anspruch 13 oder 14, bei dem der unterdrückte Teil im erfassten Bündel in Funktion einer Aktivitätsinformation des wiederzugebenden Signals platziert wird.

18. Verfahren nach Anspruch 17, bei dem die Aktivitätsinformation des wiederzugebenden Signals nach einer wenigstens teilweisen Dekodierung des Inhalts der Pakete erhalten wird.

19. Verfahren nach Anspruch 13 oder 14, bei dem der unterdrückte Teil derart platziert wird, dass vermieden wird, dass der Pufferspeicher im Laufe der Verarbeitung des Bündels leer ist.

20. Verfahren nach Anspruch 19, bei dem eine Signalgröße ermittelt wird, welche aufgrund eines Leerzustandes des Pufferspeichers (6) im Lauf der Verarbeitung des Bündels fehlen könnte, wenn der unterdrückte Teil am Anfang des erfassten Bündels platziert wäre, und, sofern die ermittelte Größe nicht Null ist, der Teil im erfassten Bündel derart platziert wird, dass im Pufferspeicher aus wenigstens einem empfangenen Paket erhaltene Elemente am Anfang des erfassten Bündels gespeichert werden, wobei eine Signalgröße dargestellt wird, welche wenigstens gleich der ermittelten Größe ist.

21. Verfahren nach einem der vorhergehenden Ansprüche, bei dem die im Pufferspeicher (6) gespeicherten Elemente Signalcodierungsdaten umfassen, welche aus den empfangenen Paketen extrahiert sind.

**22.** Verfahren nach einem der Ansprüche 1 bis 20, bei dem die im Pufferspeicher (6) gespeicherten Elemente Zeitsegmente des wiederzugebenden Signalflusses umfassen, welche durch Dekodieren des Inhalts der empfangenen Pakete erhalten werden.

**23.** Vorrichtung zum Empfang von Paketen numerischer Daten, welche aufeinanderfolgende Zeitsegmente eines wiederzugebenden Signals darstellen, umfassend einen im first-in-first-out-Modus gestalteten Pufferspeicher (6), um aus den empfangenen Paketen erhaltene Elemente zu empfangen, und Mittel zum Überwachen des Inhalts des Pufferspeichers entsprechend einem Verfahren nach einem der vorhergehenden Ansprüche.

FIG.1.

FIG.2.

EP 1 427 154 B1

RÉSEAU ASYNCHRONE

1 INTERFACE RÉSEAU

2 DÉPAQUÉTISATION IP / UDP / RTP

FIG.3.

7 CONTRÔLE

FIFO 6

8 INTERFACE RÉSEAU

RÉSEAU SYNCHRONE

RÉSEAU ASYNCHRONE

1 INTERFACE RÉSEAU

2 DÉPAQUÉTISATION IP / UDP / RTP

FIG.4.

DÉCODEUR AUDIO 3

7 CONTRÔLE

FIFO 6

CODEUR AUDIO 9

INTERFACE LAN 10

11 → RÉCEPTION PAQUET ( p , ES , T )

OUI — $p > p'$ ? — NON — 12

14 → $W \leftarrow (T - T') - (ES - ES')$

15 →
$p' \leftarrow p$
$T' \leftarrow T$
$ES' \leftarrow ES$

16 → $B \leftarrow \dfrac{W}{\delta} + 1$

OUI — $B > SBE$ ? — NON — 17

18 → DÉTECTION RAFALE EXCESSIVE

13 → GESTION NORMALE FIFO

$Nb_\delta \leftarrow \left[ \dfrac{B}{CR_\delta} \right]$ — 19

$N_{pB} \leftarrow B + Nb_\delta - 1$ — 20

TRAITEMENT RAFALE EXCESSIVE — 21

FIG.5.

FIG.6.

PAQUETS EN TRANSIT DANS LE RÉSEAU

PAQUETS REÇUS PENDANT δ

FIFO 6

TEMPS

EP 1 427 154 B1

FIG. 7

B = 7 { n+6 / n+5 / n+4 / n+3 / n+2 / n+1 / n

PAQUETS EN TRANSIT DANS LE RÉSEAU

PAQUETS REÇUS PENDANT $\delta$

FIFO 6

$n+W_n$    $n+W_n+\delta$    $n+W_n+2\delta$    $n+W_n+3\delta$    TEMPS

EP 1 427 154 B1

FIG.8.

$B = 7$ { n+6 / n+5 / n+4 / n+3 / n+2 / n+1 / n

PAQUETS EN TRANSIT DANS LE RÉSEAU

PAQUETS REÇUS PENDANT $\delta$

FIFO 6

$n + w_n$    $n + w_n + \delta$    $n + w_n + 2\delta$    $n + w_n + 3\delta$    TEMPS

EP 1 427 154 B1

FIG.9.

PAQUETS EN TRANSIT DANS LE RÉSEAU

PAQUETS REÇUS PENDANT $\delta$

FIFO 6

$B = 7$

$n+w_n$     $n+w_n+\delta$     $n+w_n+2\delta$     $n+w_n+3\delta$     TEMPS

EP 1 427 154 B1

FIG.10.

B = 7

n + 6
n + 5
n + 4
n + 3
n + 2
n + 1
n

n + 6
n + 5
n + 4
n + 3

n + 7
n + 6

PAQUETS EN TRANSIT DANS LE RÉSEAU

n + 2
n + 1
n

n + 5
n + 4
n + 3

n + 8
n + 7
n + 6

n + 9

PAQUETS REÇUS PENDANT δ

n + 2
n + 1
n

n + 3
n + 2
n + 1

n + 8
n + 7
n + 3
n + 2

n + 9
n + 8
n + 7
n + 3

FIFO 6

n + w_n     n + w_n + δ     n + w_n + 2δ     n + w_n + 3δ     TEMPS

EP 1 427 154 B1

FIG.11.

PAQUETS EN TRANSIT DANS LE RÉSEAU

PAQUETS REÇU PENDANT $\delta$

FIFO 6

B=7

TEMPS

FIG.12.

PAQUETS EN TRANSIT DANS LE RÉSEAU

PAQUETS REÇUS PENDANT $\delta$

FIFO 6

$n+w_n$    $n+w_n+\delta$    $n+w_n+2\delta$    $n+w_n+3\delta$    TEMPS

FIG.13.

PAQUETS EN TRANSIT DANS LE RÉSEAU

PAQUETS REÇUS PENDANT $\delta$

FIFO 6

TEMPS

$B=7$

| n+6 |
| n+5 |
| n+4 |
| n+3 |
| n+2 |
| n+1 |
| n |

n+6

$n+w_n$:
| n+5(S) |
| n+4(S) |
| n+3(S) |
| n+2 |
| n+1 |
| n |

| n+2 |
| n+1 |
| n |

$n+w_n+\delta$:
| n+7 |
| n+6 |

| n+7 |
| n+6 |
| n+2 |
| n+1 |

$n+w_n+2\delta$:
n+8

| n+8 |
| n+7 |
| n+6 |
| n+2 |

$n+w_n+3\delta$:
n+9

| n+9 |
| n+8 |
| n+7 |
| n+6 |